# FASCICULE DE BREVET EUROPEEN

(11) **EP 1 019 312 B1**
(45) Date de publication et mention de la délivrance du brevet: **19.06.2002**
(21) Numéro de dépôt: 97947139.8
(22) Date de dépôt: 26.11.1997
(51) Int. Cl.: B66F 7/02, B60P 3/08

(54) **BLOC DE TRANSLATION A ECROU DEBRAYABLE POUR ENSEMBLES DE LEVAGE A VIS**
LINEARSCHLITTEN MIT ENTKUPPELBARER MUTTER FÜR HEBEVORRICHTUNGEN MIT SPINDELANTRIEB
TRANSLATING BLOCK WITH DISENGAGEABLE NUT FOR SCREW LIFTING UNITS

(30) Priorité: 26.11.1996 FR 9614625
(43) Date de publication de la demande: 19.07.2000
(73) Titulaire: Lohr Industrie, 67980 Hangenbieten (FR)
(72) Inventeur: ANDRE, Jean-Luc, F-67210 Obernai (FR); BRION, Serge, F-67370 Stutzheim-Offenheim (FR)
(74) Mandataire: Metz, Paul
(86) Numéro de dépôt international: FR9702129
(87) Numéro de publication internationale: WO9823528

(56) Documents cités:
- FR-A- 2 625 187

## Description

L'invention se rapporte à un bloc de translation à écrou débrayable destiné à être monté sur un ensemble de levage à vis soutenant une ou plusieurs structures porteuses mobiles verticalement. Il peut s'agir des plateaux porteurs ou des plans de chargement d'un véhicule porte-voitures ou d'un autre véhicule de transport spécialisé car équipé d'un ou de plusieurs ensembles de levage.

On connaît notamment ces ensembles de levage à vis sur les véhicules porte-voitures sur lesquels la vis, enfermée dans un montant appelé poteau entraîne un ou plusieurs écrous reliés chacun à un plateau porteur par l'intermédiaire d'une cage comportant une interface avec le plateau.

En général, les vis sont disposées en regard pour former un couple et soutenir un plateau ou une plate-forme sur une même ligne transversale.

Pour le soutien complet d'un plateau de grande taille ou d'une plate-forme assez étendue et permettre de nombreuses positions d'inclinaison, on prévoit un couple de vis au voisinage de chacune des extrémités. Ces inclinaisons correspondent aux positions des écrous de chaque couple sur leurs vis respectives.

Les véhicules sont équipés généralement de plusieurs plateaux ou plate-formes mobiles reliés chacun ou chacune aux couples de vis de levage par des écrous porteurs de translation. On constitue ainsi plusieurs étages de chargement correspondant chacun à un écrou propre par vis. Il peut donc exister plusieurs écrous porteurs pour une même vis.

La nécessité de charger successivement les voitures implique une totale indépendance de mouvement entre les différents supports de chargement.

Cette indépendance pour deux écrous de translation portés par une même vis ne peut résulter que de l'existence d'une commande propre à chaque écrou en raison du caractère unique de la force motrice procurée par la vis.

C'est le rôle de l'écrou en prise d'entraînement commandé sur la vis. Ce type d'écrou est déjà connu et appelé classiquement écrou débrayable.

Un type d'écrou de translation débrayable connu est décrit dans le brevet français n° 2 625 187 au nom de la société LOHR INDUSTRIE.

Il comprend un corps mécanique coulissant à guidage le long des flancs internes d'un poteau par l'intermédiaire de patins latéraux. Ces patins sont montés sur les flancs du corps mécanique coulissant relié à pivotement par un bout d'axe, ou autrement articulé à un plateau porteur. Le corps coulissant sert de cage à une douille filetée montée sur la vis et en appui de rotation contre la sous face supérieure du corps coulissant. Il existe des moyens d'accouplement-désaccouplement commandés entre la douille filetée et une structure coaxiale fixe ou rendue fixe en rotation par rapport au corps mécanique en vue, d'une part de permettre le déplacement de translation du corps mécanique coulissant suite à l'entraînement moteur fourni par la vis sur la douille filetée, et d'autre part de rendre la vis sans effet de translation en laissant la douille filetée librement tourner sur l'appui de rotation.

Selon le mode de réalisation décrit, le moyen d'accouplement-désaccouplement est constitué par une denture supérieure et une denture inférieure prévue sur le chant d'extrémité, l'une de la surface latérale de la douille et l'autre en regard sur une pièce intermédiaire mobile axialement en rapprochement d'engagement ou en éloignement par un moyen mécanique à vérin.

L'appui de rotation est constitué par une butée à billes.

On peut ainsi, en commandant les moyens de rapprochement-éloignement, rendre la douille filetée mobile ou immobile en rotation sur elle-même et donc en translation le long de la vis.

Cette réalisation représente une complexité constructive et de constitution.

En effet, elle met en oeuvre deux vérins de petites dimensions sensibles à la pollution et des pièces de forme spéciale nécessitant une fabrication coûteuse.

De plus, les dentures correspondantes doivent être conformées sur chaque chant périphérique circulaire en regard en parfaite correspondance de complémentarité.

Il faut également tenir compte du bruit de fonctionnement.

Par ailleurs, sous l'effet des vibrations, on peut obtenir, même à l'état débrayé, un mouvement intempestif de l'écrou.

La constitution de cet écrou débrayable empêche de prévoir un témoin d'usure visible ou facilement accessible.

Finalement, si le sens de l'effort appliqué à l'écrou est inversé, le dispositif ne peut pas fonctionner.

La présente invention a pour but de remédier à ces inconvénients en proposant un bloc de translation à écrou débrayable, fiable en fonctionnement, facile à monter et dont les pièces constituantes sont peu onéreuses de par leur facilité de fabrication.

A cet effet, elle se rapporte à un bloc de translation à écrou débrayable pour ensembles de levage à vis, notamment ensembles reliés à une structure porteuse d'une charge sur un véhicule routier comportant un écrou maintenu dans un corps mécanique coulissant le long d'un profilé de guidage sous l'effet moteur d'une vis traversant le corps coulissant, le bloc de translation comprenant un dispositif d'immobilisation-libération de l'écrou en rotation sur lui-même, caractérisé en ce que :
. l'écrou peut être en deux pièces jumelées mécaniquement distantes entre elles d'un intervalle,
. un appui de rotation relie l'extrémité chargée de l'écrou à chacune des parois supérieure et inférieure du corps coulissant,
. l'écrou comporte sur sa surface latérale des gorges longitudinales axiales,
. le dispositif d'immobilisation-libération se compose de deux volets pivotants chacun autour d'un axe parallèle à celui de la vis, volets dont les extrémités libres viennent s'engager chacune dans une gorge de l'écrou,
. les volets du mécanisme sont montés chacun en rappel élastique de rabattement vers l'écrou et actionnés chacun en ouverture par un moyen moteur de poussée.

En ce qui concerne les avantages, ils sont nombreux et multiples. On en citera les principaux ci-après.

Il s'agit d'un écrou de sécurité car:
. on peut facilement mesurer l'usure,
. les liaisons élastiques d'extrémité avec les parois adjacentes du corps de translation permettent de filtrer efficacement les vibrations mécaniques et d'éviter ainsi l'entraînement intempestif de l'écrou à l'état débrayé,
. le dispositif de débrayage présente une grande sécurité de fonctionnement notamment par le rappel automatique en fermeture des volets garantissant un état immobilisé de l'écrou en cas d'absence ou de défaillance de la commande,
. l'ensemble mécanique mobile permet des dimensions telles des pièces actives que l'on peut passer confortablement tout le couple, en particulier les volets travaillent sur tout le corps de l'écrou,
. l'énergie de la commande est pneumatique : cette énergie est disponible sur le camion, et de plus son efficacité est insensible à la pollution du circuit pneumatique car on n'utilise pas de pièces mobiles dans le circuit pneumatique,
. l'écrou est monté flottant dans le bloc par des liaisons élastiques apportant une certaine indépendance de mouvement entre la cage et améliorant la fiabilité fonctionnelle de l'ensemble,
. l'écrou est fonctionnellement équivalent quel que soit le sens de la force exercée sur l'écrou rendant son utilisation possible en position horizontale,
. le bloc présentant une symétrie gauche/droite et bas/haut permet d'assurer une totale réversibilité fonctionnelle,
. le bruit de fonctionnement est notablement réduit,
. l'écrou étant réalisé en deux pièces soumises à une contrainte d'écartement, il permet de diminuer les jeux fonctionnels,
. en position déverrouillée, les volets du mécanisme de débrayage viennent en contact d'appui avec la face interne adjacente du poteau calant ainsi le corps de translation par rapport au poteau pour en augmenter la fiabilité de fonctionnement,
. le dispositif est protégé à l'égard de toute agression extérieure notamment par rapport aux intempéries et au rayonnement ultraviolet.

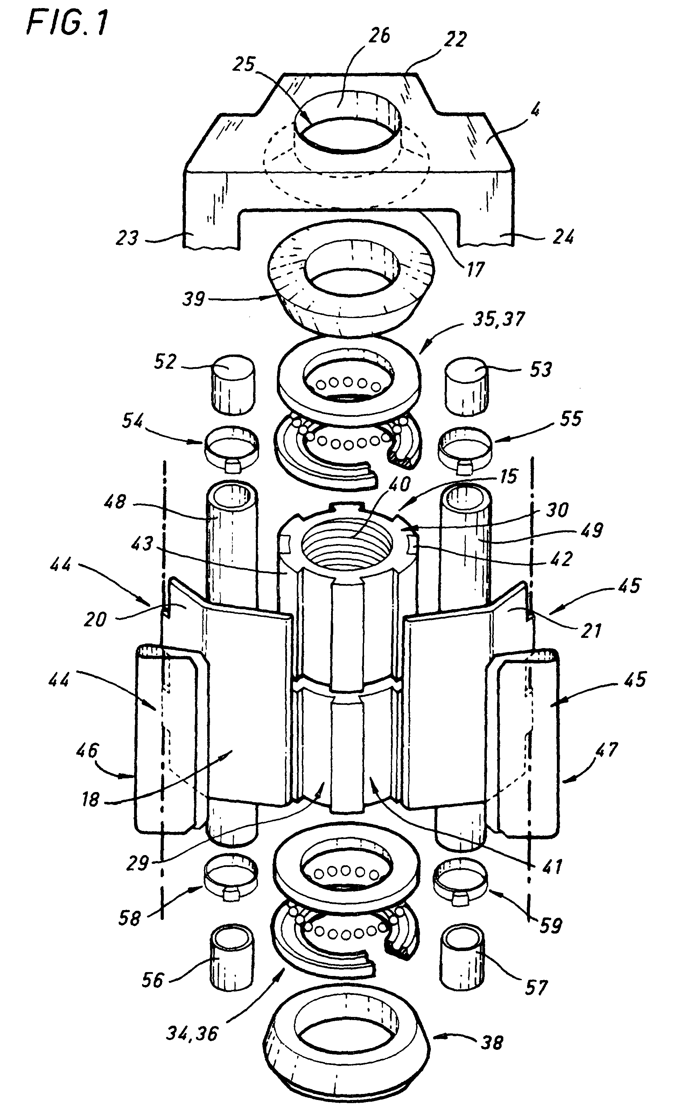

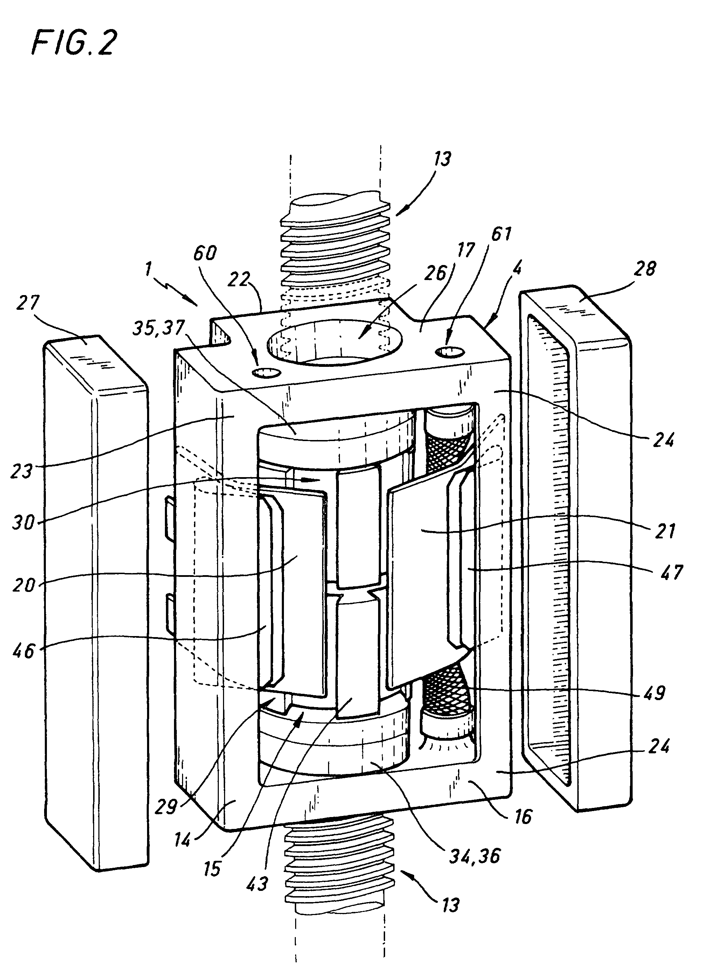

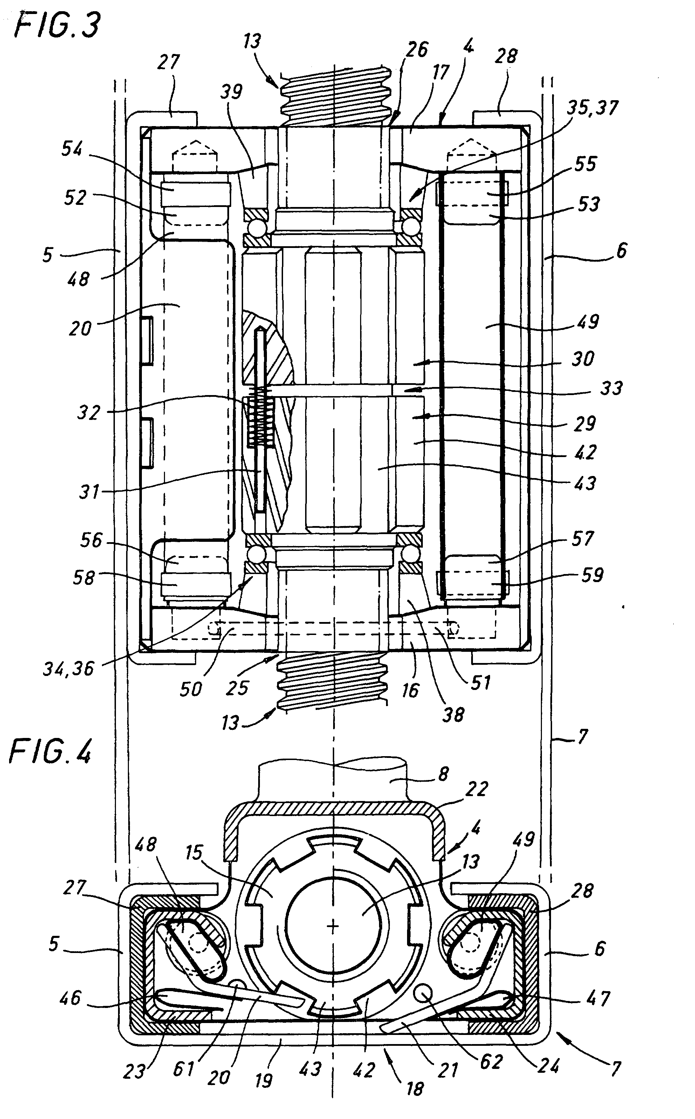

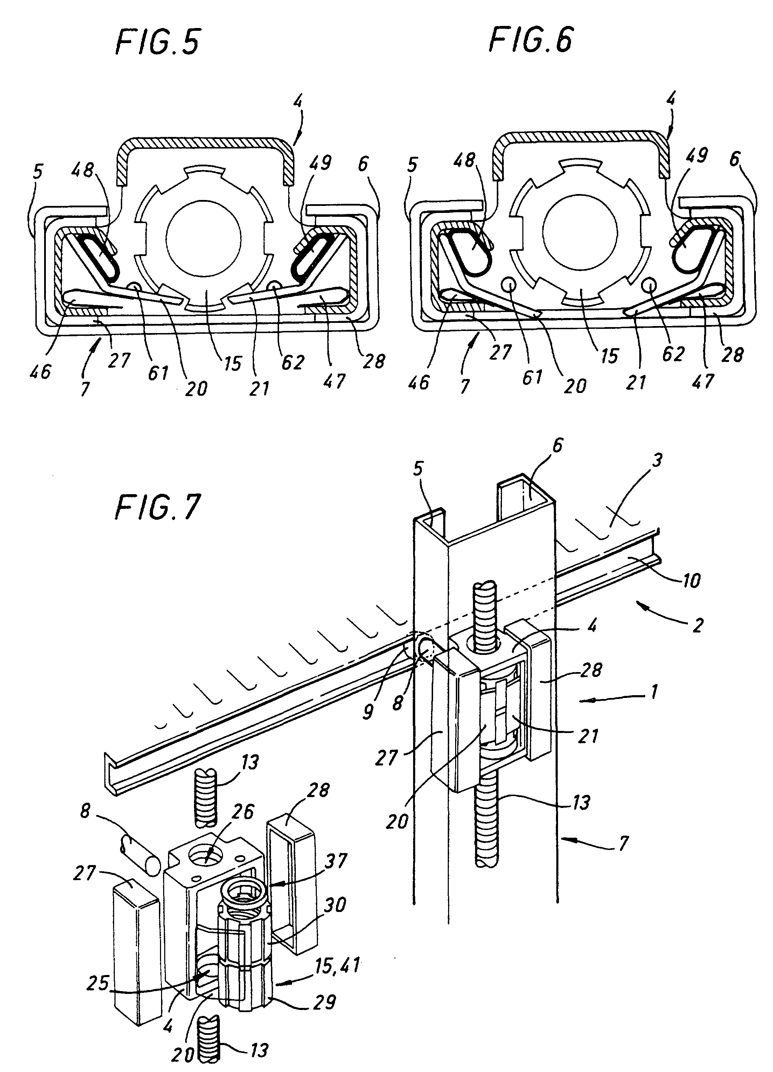

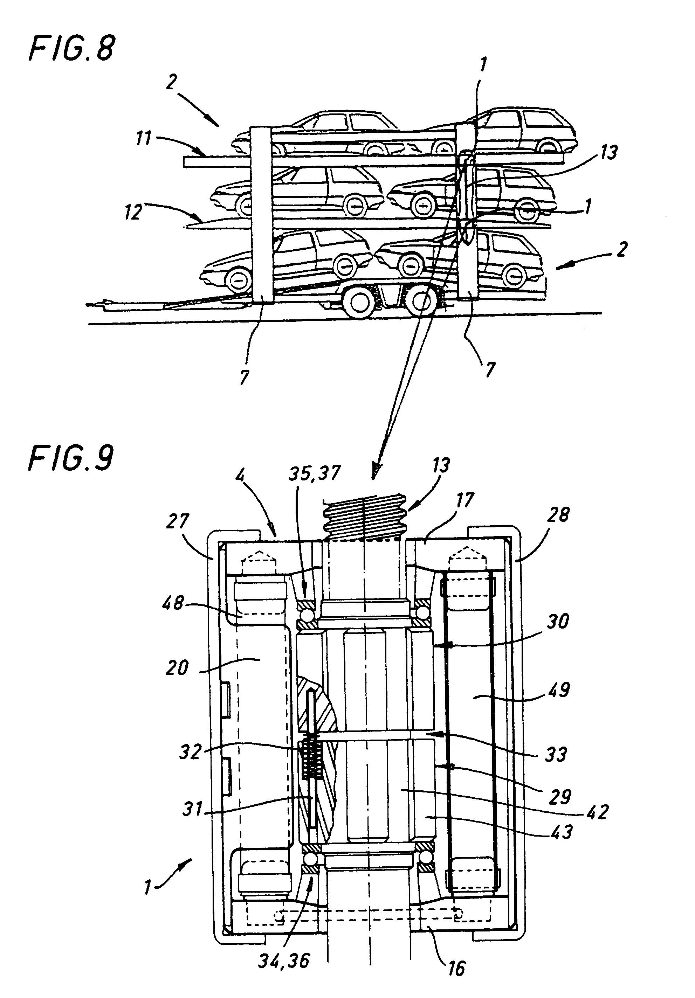

D'autres caractéristiques et avantages de l'invention apparaîtront dans la description qui suit, donnée à titre d'exemple et accompagnée des dessins dans lesquels :
. la figure 1 est une vue générale en perspective représentant en éclaté un bloc de translation à écrou débrayable selon l'invention ;
. la figure 2 est une vue en perspective du bloc de translation à l'état monté ;
. les figures 3 et 4 sont l'une une vue mixte en coupe et en plan avec écorché sur une tige de jumelage et l'autre une coupe transversale entre les deux pièces d'écrou avec figuration du bout d'arbre d'interface ,
. les figures 5 et 6 sont des vues de détail en perspective et en coupe montrant les deux états du dispositif de débrayage ;
. la figure 7 est une vue générale en perspective d'un exemple d'application montrant un seul bloc de translation à écrou débrayable, avec représentation simplifiée de celui-ci en perspective éclatée ne prenant en compte que ses éléments essentiels ;
. la figure 8 est une vue générale en perspective montrant un exemple d'application sur un véhicule porte-voitures à deux plateaux mobiles ;
. la figure 9 est une vue agrandie de chaque bloc repéré sur la figure 8.

Dans une des applications de l'invention, le bloc de translation 1 est appelé, éventuellement avec d'autres blocs homologues, à constituer un ensemble de levage 2 à vis par exemple d'un plateau porteur 3 en particulier de voitures comme représenté sur les figures 7 et 8.

A cet effet, le bloc de translation 1 est formé d'un corps mécanique 4 monté coulissant le long de glissières par exemple les structures internes de flanc 5 et 6 de profilés de guidage tels que 7 à section par exemple en C, abritant chacun une vis de levage. Ces profilés de guidage lorsqu'ils sont disposés verticalement sont protégés par des structures de carrosserie appelées poteaux comme il apparaît sur les figures. Bien entendu, l'invention vise aussi une disposition autre, notamment horizontale.

Ce corps mécanique 4 est relié à une structure porteuse par exemple à pivotement par un bout d'arbre 8 faisant office d'interface avec la structure porteuse 3. Cette interface est solidaire de la face arrière du corps mécanique 4. Au besoin, l'extrémité libre du bout d'arbre 8 peut être munie d'un galet 9 ou de coulisseaux se déplaçant de long d'un profilé 10 de bordure équipant le chant longitudinal de la structure porteuse.

Le corps mécanique peut aussi être autrement articulé à la structure porteuse adjacente.

Pour une indépendance totale de mouvement entre les plateaux mobiles par exemple 11,12 des différents étages de chargement (figure 8) dont les mouvements proviennent de l'effet moteur d'une vis 13 unique par profilé de guidage tels que 7 c'est-à-dire pour chaque ligne verticale de points d'appui, on montera sur chaque vis 13 unique autant de blocs de translation 1 qu'il existe de plateaux porteurs mobiles ou plus généralement de structures porteuses 11,12 soutenues, par exemple deux, comme représenté sur la figure 8.

L'environnement fonctionnel de chaque bloc de translation est représenté sur les figures 7 et 8.

On distingue sur la figure 7 le bloc de translation 1 et ses principales pièces constituantes par la représentation annexe adjacente en éclaté ainsi que la vis 13 abritée par le profilé de guidage 7 et un plateau porteur 3 en tôle perforée auquel il est relié par une articulation d'interface par exemple par pivotement au moyen du bout d'arbre 8, du galet 9 et du profilé de bordure 10.

Le bloc de translation 1 à écrou débrayable selon la présente invention se compose des moyens généraux suivants.

Un corps mécanique 4 coulissant le long d'une structure formant profilé de guidage 7 et pourvu d'une interface 8 de liaison mécanique avec un plateau porteur 3 sert de cage 14 à un écrou débrayable 15 logé dans ce corps et monté à l'extrémité chargée c'est-à-dire située du côté de la charge sur le fond 16 ou la voûte 17 de la cage 14. Dans le cas d'une utilisation réversible, chacune des extrémités libres haute et basse de l'ensemble d'écrou 15 est montée en appui de rotation sur le fond 16 et sur la voûte 17 de la cage 14.

L'écrou 15 est immobilisé puis libéré en rotation par un dispositif d'immobilisation-libération 18. Ce dispositif provoque également le calage de la cage 14 de l'écrou en position débrayée par un appui sur la portion 19 du poteau en regard de la face avant ouverte de la cage 14. Ce dispositif comporte deux volets latéraux pivotants 20 et 21 actionnés chacun en libération de rotation de l'écrou 15 par un moyen moteur par exemple pneumatique et rappelé en permanence en position de blocage par une force élastique.

On décrira maintenant en détail les moyens particuliers tels que représentés sur les figures.

Le bloc de translation 1 à écrou débrayable 15 est un ensemble formé du corps mécanique 4 en forme de cage 14, à face avant ouverte, à face arrière 22 pleine et à parois latérales 23 et 24 ainsi qu'à parois transversales inférieure et supérieure formant respectivement le fond 16 et la voûte 17, toutes de forte épaisseur. Ces dernières présentent une face intérieure de forme générale conique traversée chacune par un conduit cylindrique 25 débouchant sur une ouverture circulaire lisse 26 constituant le passage de la vis 13 de levage traversant le corps mécanique de translation 4 de part en part.

Le corps mécanique 4 de translation coulisse le long de chaque profilé de guidage 7 soit directement par ses structures internes de flanc 5 et 6 soit par l'intermédiaire de patins amovibles de coulissement 27 et 28 constituant des garnitures anti-friction sous la forme de pièces d'usure interchangeables (figure 2).

Le corps mécanique 4 de translation abrite l'écrou débrayable 15 monté sur la vis de levage 13. Selon une forme de réalisation avantageuse, ce dernier peut être constitué de deux pièces d'écrou 29,30 par exemple mais non obligatoirement de même longueur, montées sur la vis et jumelées entre elles par exemple au moyen de trois tiges de jumelage telles que 31 longitudinales et parallèles entre elles et à l'axe de la vis.

Ces deux pièces d'écrou 29,30 sont maintenues à une certaine distance l'une de l'autre par une force de rappel élastique d'écartement fournie, par exemple, par un ressort tel que 32 monté coaxial sur chaque tige de jumelage 31. Cette contrainte en écartement par maintien élastique à distance permet un meilleur appui des pièces d'écrou sur la vis et donne naissance à un espace ou un intervalle vide 33 entre les deux faces en regard des pièces d'écrou, intervalle de longueur variable en fonction de l'état d'usure des pièces.

Cette particularité constructive permet de vérifier l'usure visuellement ou à l'aide d'une jauge d'épaisseur.

Les pièces d'écrou 29,30 peuvent avantageusement être réalisée en matière plastique de préférence autolubrifiées.

Cet ensemble de pièces d'écrou 29,30 de translation est monté sur la vis 13 et se trouve calé par au moins son extrémité libre chargée c'est-à-dire celle située du côté de la charge. Dans le cas de la version réversible représentée, chacune de ses extrémités libres est calée contre la paroi respectivement de fond 16 et de voûte 17 par un appui de rotation bas 34 et haut 35 par l'intermédiaire à chaque fois par exemple d'une butée à billes inférieure 36 et supérieure 37. Cet appui est lui même calé contre la portion de paroi en regard de forme générale conique par un coussin annulaire inférieur 38 et supérieur 39 de forme générale tronconique assurant une liaison élastique destinée à filtrer les vibrations mécaniques et à permettre un débattement de jeu élastique de l'écrou 15 par rapport au corps 4 de translation.

Les pièces d'écrou 29, 30 sont des masses de forme générale en cylindre creux à face latérale interne conformée en pas de vis 40 par lequel elles sont montées sur la vis 13 de levage et à surface latérale externe crénelée 41 de forme particulière visible sur les figures. Il s'agit d'une succession régulière de gorges axiales telles que 42 à profil sensiblement rectangulaire délimitant entre elles des dents axiales 43 de profil de section droite de forme générale trapézoïdale.

Cette denture forme des structures de blocage qui coopèrent avec les bords longitudinaux libres d'extrémité des volets latéraux pivotants 20,21 du dispositif d'immobilisation-libération 18. Leur forme générale est coudée et chacun d'entre eux est articulé à pivotement par une articulation 44,45 de type charnière autour d'un axe parallèle à la vis 13 sur la paroi latérale adjacente 23,24 du corps mécanique coulissant 4. La disposition de ces volets est symétrique par rapport à l'axe de la vis. Ces volets pivotants 20,21 coudés sont au repos rabattus vers les structures de blocage dont les extrémités viennent s'immobiliser dans les gorges sous l'effet pour chaque volet, d'une force élastique de rappel. Cette force est fournie par exemple par un ressort à lame repliée 46,47 en appui d'un côté sur le retour de la paroi latérale adjacente 23,24 du corps coulissant et de l'autre sur la joue du volet pivotant 20,21.

Chaque volet pivotant 20,21 est actionné en dégagement par un moyen moteur de poussée de préférence à énergie pneumatique par exemple sous la forme d'un tube flexible gonflable 48,49 en particulier un tuyau élastique plat gonflé par de l'air comprimé à partir de canaux d'alimentation 50,51 par exemple conformés dans la masse de la paroi au fond 16 du corps 4 de translation (figure 3). Chaque tuyau gonflable 48,49 agit par poussée sur la face arrière de chaque volet 20,21. Sa longueur correspond au moins à la hauteur du volet. La mise en pression de chaque tuyau le fait se gonfler sur toute sa hauteur. Cette déformation transversale est utilisée comme force motrice de poussée pour provoquer le faible mouvement moteur de pivotement du volet, à l'encontre de la force de rappel mais suffisant pour extraire l'extrémité de chaque volet de la gorge axiale 42 de blocage en vue de la libération de l'écrou 15 qui, sous l'effet d'entraînement de la vis 13, tourne sur lui-même en utilisant les butées à billes 36 et 37 comme appui tournant.

A l'état débrayé les volets du dispositif d'immobilisation-libération 18 sont en contact de poussée avec la paroi en regard du profilé de guidage 7 immobilisant le corps de translation 4 par poussée de calage contre la face interne des structures internes de flanc 5 et 6.

Cette configuration est celle du débrayage dans laquelle la vis 13 entraîne l'écrou 15 en rotation sans provoquer de mouvement de translation. Elle correspond à une commande active.

Cet état est temporaire. Il correspond à un état de travail car, dès que l'action motrice de la force pneumatique est supprimée, le volet 20,21 revient automatiquement en configuration de repos dans laquelle l'écrou est bloqué pour provoquer le mouvement de translation le long du profilé de guidage 7.

Les tubes flexibles ou tuyaux 48,49 sont montés borgnes à l'une de leurs extrémités par emmanchement sur une pièce d'obturation 52,53 et maintien par un collier 54,55. Ils sont montés de la même façon à leur extrémité opposée sur un embout 56,57 avec collier 58,59 mais en communication respective par les canaux 50,51 avec une source d'air comprimé à travers un distributeur (non représenté).

En vue d'un secours manuel dans le cas d'une défaillance de la commande, on prévoit l'introduction de broches ou de tiges à travers des perforations supérieures 60 et 61 (figure 2) et des perforations inférieures 62 et 63 réalisées respectivement à travers les parois de voûte 17 et de fond 16 de la cage 14. Les tiges ou broches introduites permettent de manoeuvrer manuellement les volets pivotants et de débrayer ainsi manuellement l'écrou.

On expliquera maintenant le fonctionnement des moyens décrits ci-dessus.

On distingue deux régimes de fonctionnement.

Le premier régime est le régime entraîné c'est-à-dire celui dans lequel l'écrou 15 est immobilisé en rotation. Il s'agit du régime permanent ou de repos en raison des forces élastiques de rappel qui ramènent les volets dans les gorges axiales 42 en position d'immobilisation de l'écrou.

Dans ce régime, l'écrou 15 est immobile par rapport au bloc mécanique 4 qu'il contraint en translation par l'effet de la conversion du mouvement rotatif de la vis.

Le deuxième régime est le régime ou le mode commandé correspondant à la libre rotation de l'écrou. Sous l'effet de la force de poussée d'origine pneumatique, transmise par les tuyaux gonflables 48,49 les volets pivotent et se dégagent des gorges 42 libérant ainsi l'écrou 15 en rotation sur lui-même par appui rotatif sur les deux butées à billes d'extrémité 36,37.

L'écrou 15 tourne avec la vis et ne transmet aucune force de déplacement linéaire le long du profilé de guidage au corps coulissant 4 articulé à la structure porteuse adjacente.

## Revendications

1. Bloc de translation à écrou débrayable pour ensembles à vis, notamment ensembles reliés à une structure porteuse d'une charge sur un véhicule routier comportant un écrou (15) logé dans un corps mécanique coulissant (4) le long d'un profilé de guidage (7) sous l'effet moteur d'une vis (13) traversant le corps coulissant (4), le bloc de translation (1) comprenant un dispositif d'immobilisation-libération (18) de l'écrou en rotation sur lui-même, **caractérisé par** :
. un appui de rotation qui relie l'extrémité libre chargée de l'écrou à la paroi transversale adjacente du corps coulissant (4),
. une liaison élastique reliant l'appui de rotation à la paroi supérieure adjacente transversale du corps de translation (4),
. l'écrou comporte sur sa surface latérale des gorges longitudinales axiales (42) séparées par des dents (43),
. le dispositif d'immobilisation-libération (18) est un mécanisme à deux volets pivotants (20,21) chacun autour d'un axe parallèle à la vis, volets dont l'extrémité libre de chacun d'entre eux vient s'engager dans une gorge (42) de l'écrou en vue de son blocage en rotation,
. les volets (20,21) du dispositif d'immobilisation-libération (18) sont montés chacun en rappel élastique de rabattement vers l'écrou (15) et actionnés chacun en ouverture par un moyen moteur de poussée.

2. Bloc de translation selon la revendication 1 **caractérisé en ce qu'**un appui de rotation relie chacune des extrémités libres de l'écrou à la parois transversale en regard du corps coulissant (4).

3. Bloc de translation selon la revendication 1 ou 2 **caractérisé en ce que** les appuis de rotation sont des butées à billes (36,37).

4. Bloc de translation selon l'une quelconque des revendications précédentes **caractérisé en ce que** les appuis de rotation (34,35) reposent sur une pièce élastique s'appuyant sur le corps du bloc de translation.

5. Bloc de translation selon la revendication 1 **caractérisé en ce que** l'écrou est réalisé en deux pièces (29,30) jumelées mécaniquement distantes entre elles d'un intervalle (33).

6. Bloc de translation selon la revendication 5 **caractérisé en ce que** les pièces d'écrou sont mécaniquement jumelées.

7. Bloc de translation selon la revendication 5 ou 6 **caractérisé en ce que** les pièces d'écrou sont soumises à une contrainte élastique en écartement.

8. Bloc de translation selon l'une quelconque des revendications de 5 à 7 **caractérisé en ce que** les pièces d'écrou (29) et (30) comportent sur chacune de leur surface latérale des gorges axiales (42) en prolongation l'une de l'autre séparées par des dents (43).

9. Bloc de translation selon la revendication précédente **caractérisé en ce que** la forme de profil des gorges axiales (42) est sensiblement rectangulaire et **en ce que** la forme de profil des dents est sensiblement trapézoïdale.

10. Bloc de translation selon la revendication 1 **caractérisé en ce que** le moyen moteur de poussée du dispositif d'immobilisation-libération actionnant chacun des volets pivotants est pneumatique.

11. Bloc de translation selon la revendication précédente **caractérisé en ce que** les volets pivotants du dispositif d'immobilisation-libération sont actionnés en pivotement d'ouverture par un tuyau souple (48,49) gonflé par de l'air comprimé de longueur au moins égale à la hauteur du volet.

12. Bloc de translation selon la revendication 1 **caractérisé en ce qu'**à l'état débrayé les volets (20,21) du dispositif d'immobilisation-libération sont en contact de poussée avec la paroi adjacente en regard du profilé de guidage (7).

## Patentansprüche

1. Translationsblock mit einer entkuppelbaren Mutter für eine Spindeleinheit, die insbesondere mit einer lasttragenden Struktur eines Straßenfahrzeugs verbunden ist, wobei die Mutter (15) in einem mechanischen Körper (4) angeordnet ist, der entlang einem Führungsprofil (7) unter Antriebswirkung einer den Körper (4) durchsetzenden Spindel (13) verlagerbar ist, und der Translationsblock (1) mit einer Einrichtung (18) zum Festsetzen und Freistellen der um sich selbst drehenden Mutter (15) ausgestattet ist, **dadurch gekennzeichnet daß**
- ein Drehauflager (34, 35) das belastete freie Ende der Mutter (15) mit einer benachbarten Querwand des verlagerbaren Körpers (4) verbindet;
- eine elastische Verbindung das Drehauflager (34, 35) mit einer benachbarten oberen Querwand des verlagerbaren Körpers (4) verbindet;
- die Mutter (15) an ihrer Mantelfläche axiale Längsnuten (42) aufweist, die durch Zähne (43) voneinander getrennt sind;
- die Einrichtung (18) zum Festsetzen und Freistellen ein Mechanismus mit zwei jeweils um eine zu der Spindel parallele Achse schwenkbaren Flügeln (20, 21) ist, deren jeweils freies Ende mit einer Nut (42) der Mutter (15) in Eingriff bringbar sind, um sie gegen Rotation zu blockieren;
- die Flügel (20, 21) der Einrichtung (18) zum Festsetzen und Freistellen jeweils gegen die Mutter (15) elastisch vorgespannt und durch ein Antriebsmittel in ihre Öffnungsstellung bewegbar sind.

2. Translationsblock nach Anspruch 1, **dadurch gekennzeichnet, daß** je ein Drehauflager (34, 35) jedes freie Ende der Mutter (15) mit der gegenüberliegenden Querwand des verlagerbaren Körpers (4) verbindet.

3. Translationsblock nach Anspruch 1 oder 2, **dadurch gekennzeichnet, daß** die Drehauflager (34, 35) von Axialkugellagern (36, 37) gebildet sind.

4. Translationsblock nach einem der vorangehenden Ansprüche, **dadurch gekennzeichnet, daß** die Drehauflager (34, 35) einem elastischen Glied anliegen, welches sich an dem Körper des Translationsblocks (1) abstützt.

5. Translationsblock nach Anspruch 1, **dadurch gekennzeichnet, daß** die Mutter (15) aus zwei auf Abstand (33) voneinander mechanisch gekuppelten Teilen (29, 30) gebildet ist.

6. Translationsblock nach Anspruch 5, **dadurch gekennzeichnet, daß** die Teile (29, 30) der Mutter (15) mechanisch gekuppelt sind.

7. Translationsblock nach Anspruch 5 oder 6, **dadurch gekennzeichnet, dass** die Teile (29, 30) der Mutter (15) unter einer abstandhaltenden elastischen Spannung stehen.

8. Translationsblock nach einem der Ansprüche 5 bis 7, **dadurch gekennzeichnet, dass** die Teile (29, 30) der Muttern (15) an ihren Mantelflächen fluchtende axiale Nuten (42) aufweisen, die durch Zähne (43) voneinan-der getrennt sind.

9. Translationsblock nach dem vorangehenden Anspruch, **dadurch gekennzeichnet, dass** das Profil der axialen Nuten (42) im wesentlichen rechteckig und das Profil der Zähne (43) im wesentlichen trapezförmig ist.

10. Translationsblock nach Anspruch 1, **dadurch gekennzeichnet, dass** das Antriebsmittel der jeden der beiden schwenkbaren Flügel (20,21) betätigenden Einrichtung (18) zum Festsetzen und Freistellen pneumatisch ist.

11. Translationsblock nach dem vorangehenden Anspruch, **dadurch gekennzeichnet, dass** die schwenkbaren Flügel (20, 21) der Einrichtung (18) zum Festsetzen und Freistellen mittels eines mit Druckluft aufblasbaren Schlauchs (48, 49) mit einer zumindest der Höhe der Flügel (20, 21) entsprechenden Länge in die Freistellposition verschwenkbar sind.

12. Translationsblock nach Anspruch 1, **dadurch gekennzeichnet, dass** die Flügel (20, 21) der Einrichtung (18) zum Festsetzen und Freistellen im entkuppelten Zustand mit der bezüglich des Führungsprofils (7) benachbarten Wand in Druckkontakt stehen.

## Claims

1. Translation unit having a disengageable nut for threaded assemblies, in particular assemblies connected to a structure for carrying a load on a road vehicle, comprising a nut (15) which is arranged in a mechanical member (4) which slides along a guiding profile member (7) under the motive effect of a screw (13) which extends through the sliding member (4), the translation unit (1) comprising a locking-release device (18) for the nut which pivots about itself, **characterised by**:
- a rotational support which connects the loaded free end of the nut to the adjacent transverse wall of the sliding member (4),
- a resilient link which connects the rotational support to the adjacent transverse upper wall of the translation member (4),
- the nut comprises on the lateral surface thereof axial longitudinal recesses (42) which are separated by teeth (43),
- the locking-release device (18) is a mechanism having two flaps (20, 21), each pivoting about an axis parallel with the screw, the free end of each of the flaps being engaged in a recess (42) of the nut in order to prevent pivoting thereof,
- the flaps (20, 21) of the locking-release device (18) are each arranged for hinged resilient return movement towards the nut (15) and are each activated for opening by a push-type motor means.

2. Translation unit according to claim 1, **characterised in that** a rotational support connects each of the free ends of the nut to the transverse wall opposite the sliding member (4).

3. Translation unit according to claim 1 or 2, **characterised in that** the rotational supports are thrust ball bearings (36, 37).

4. Translation unit according to any one of the preceding claims, **characterised in that** the rotational supports (34, 35) rest on a resilient component which rests against the body of the translation unit.

5. Translation unit according to claim 1, **characterised in that** the nut is constructed as two constituents (29, 30) which are coupled to each other in a mechanically separated manner with spacing (33).

6. Translation unit according to claim 5, **characterised in that** the nut constituents are mechanically coupled.

7. Translation unit according to claim 5 or 6, **characterised in that** the nut constituents are subjected to a resilient strain causing spacing.

8. Translation unit according to any one of claims 5 to 7, **characterised in that** the nut constituents (29) and (30) comprise, at each of the lateral surfaces thereof, axial recesses (42) aligned with each other which are separated by teeth (43).

9. Translation unit according to the preceding claim, **characterised in that** the profile form of the axial recesses (42) is substantially rectangular and **in that** the profile form of the teeth is substantially trapezoidal.

10. Translation unit according to claim 1, **characterised in that** the push-type motor means of the locking-release device which activates each of the pivoting flaps is pneumatic.

11. Translation unit according to the preceding claim, **characterised in that** the pivoting flaps of the locking-release device are activated to pivot open by a flexible tube (48, 49) which is inflated by compressed air and whose length is at least equal to the height of the flap.

12. Translation unit according to claim 1, **characterised in that**, in the disengaged state, the flaps (20, 21) of the locking-release device are in pushing contact with the adjacent wall opposite the guiding profile member (7).
